# EUROPEAN PATENT APPLICATION

(11) **EP 0 689 172 A2**
(43) Date of publication of application: **27.12.1995**
(21) Application number: 95304358.5
(22) Date of filing: 21.06.1995
(51) Int. Cl.: G07F 17/32, G07F 7/08

(54) **Casino gaming system**

(30) Priority: 21.06.1994 AU PM6423/94
(71) Applicant: SCANDIC INTERNATIONAL PTY. LTD., Botany, New South Wales 2019 (AU)
(72) Inventor: Culley, Edward William, Grays Point, New South Wales 2232 (AU)
(74) Representative: Mounteney, Simon James

(57) **Abstract**

A casino gaming system (10) including a portable data carrier (12) having memory means (14) with contents storing data indicative of a player's credits and
a gaming cashier station (16, 22) for the purchase and redemption of said player's credits from the data carrier (12). The gaming cashier station (16, 22) including a first interface (18) adapted to transmit the contents to the gaming cashier station (16, 22) and write to the memory means from a first data input means (20) to up-date the contents in accordance with credit, cash, or gaming token transactions.

The system also includes a gaming table station (24) where said player's credits are redeemed from the data carrier (12) for subsequent gambling. The gaming table station (24) includes a second interface adapted to transmit the contents to the gaming table station (24) and write to the memory means (14) from a second data input means (28) to up-date the contents in accordance with credit or gaming token transactions.

## Description

The present invention relates generally to a casino gaming system and more particularly to a gaming system requiring no cash at a gaming table.

The traditional method of betting at casino table games, such as blackjack, roulette, baccarat etc., involves a player exchanging money for gaming tokens at the selected table. The money to be exchanged by the player would normally be in the form of paper money only, coinage is traditionally not used. The player places an amount of money onto the gaming table surface in order to obtain gaming tokens. The gaming table croupier or dealer will, before taking the money, ensure it is displayed openly on the gaming table. An amount of tokens equal to the monetary value being exchanged is then counted out and placed in front of the player. When the player accepts the tokens, the money is then deposited in a secure drop box located beneath the gaming table. To deposit the cash the croupier or dealer uses a mechanical pusher to push the money through a slot in the table which is located directly above the secure drop box.

All the above actions are carried out in a manner that ensures the entire transaction is viewed by security cameras placed above the table game. When the player has finished playing at the gaming table, any gaming tokens held by the player are taken to a central cashier's cage to be exchanged for money. Gaming tokens are not normally exchanged for money at the gaming table themselves.

A major problem with the present table gaming system is that of cash security. Cash is located in the drop box of every table and periodically the drop boxes must be removed and transported to a counting room. Precautions, such as armed escorts, are generally utilized during the drop box transportation to attempt to reduce the risk of cash theft. Adding to the security problems is the fact that the money must by physically handled at each table by the table croupier or dealer requiring comprehensive auditing and monitoring procedures to ensure cash does not go missing from the tables themselves.

It is an object of the present invention to overcome or ameliorate at least one of these deficiencies of the prior art.

Accordingly, the invention provides a casino gaming system including:
a portable data carrier having memory means with contents storing data indicative of a player's credits;
a gaming cashier station for the purchase and redemption of said player's credits from said data carrier, said gaming cashier station including a first interface adapted to transmit said contents to said gaming cashier station and write to said memory means from a first data input means to up-date said contents in accordance with credit, cash, or gaming token transactions;
a gaming table station where said player's credits are redeemed from said data carrier for subsequent gambling, said gaming table station including a second interface adapted to transmit said contents to said gaming table station and write to said memory means from a second data input means to up-date said contents in accordance with credit or gaming token transactions.

Preferably, the portable data carrier also contains player information. Player information stored is the player/data carrier identification number, bonus points accumulated, player rating based on play frequency and size of bets and favourite drinks etc.

Desirably, the portable data carrier is configured to indicate a preferred amount of credit redemption. The amount of credit redemption may be visually indicated by a colour or other external visual feature of the portable data carrier. In this way when a croupier is given a data carrier of, for example, a particular colour he will know what chip value to redeem from the players credit. The croupier retains the ability to override this preferred amount under instruction from the player.

In a preferred embodiment, the gaming system includes more than one gaming table station and a local area network is used to connect all gaming table stations to a common data base.

Preferably, the gaming system includes more than one gaming cashier station and all the gaming table and cashier stations are connected to the data base.

The gaming system may further include an auditing system being either a portable audit collection device or an audit collection network. The auditing system may also be connected with the data base.

Preferably, the audit collection system is a portable data collection device and is capable of being connected to each individual gaming table station and up-loading all the audit data stored in each table gaming station.

In a preferred embodiment, the portable data carrier is a solid state memory device capable of reading, writing and storing encrypted data. The portable data carrier may also contain additional hardware logic to prevent unauthorised access and/or tampering of the stored data. For convenience, the portable data carrier can physically resemble a standard credit card as will be the case for a "smart card".

In one preferred embodiment, the gaming cashier station can display information to both the cashier and the player, produce hard copy receipts of transactions and store, retrieve and process audit data with respect to all transactions. These transactions may be carried out on the portable data carrier by the gaming cashier station operator. Also, gaming cashier stations are capable of being networked together to form a common data base when more than one gaming cashier station is required at a casino.

Preferably, the gaming table station may also comprise a display to ensure all transactions are visible to the player, the dealer or croupier as well as any video security monitoring system.

To keep a physical record of transactions, the gaming table station may also be able to provide a hard copy receipt, of all portable data carrier transactions, for issue to the player. The gaming table station is also capable of storing and retrieving audit data with respect to all transactions carried out on the portable data carrier as well. This data can be collected from the individual gaming table stations.

In an embodiment the gaming system is adapted to allow a casino to use non-value gaming chips.

In this embodiment the gaming table stations may include an interface respectively associated with each player at the table. These interfaces are connected to the dealer interface and allow data updating to occur directly in accordance with gaming transactions.

A preferred embodiment of the invention will now be described, by way of example only, with reference to the accompanying drawings, in which:
Figure 1 is a schematic diagram of a gaming system according to the invention; and
Figure 2 is a schematic diagram of a gaming table station according to the non-value gaming chip embodiment of the invention.

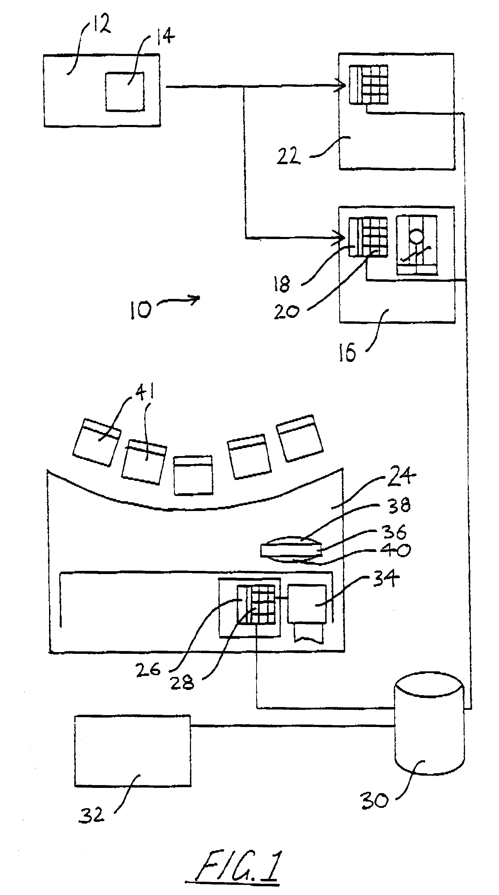

Referring to Figure 1, there is shown a gaming system 10 including a portable data carrier, in the form of a smart card 12, having a memory 14. The memory stores data indicative of a players gaming credits monetary value.

The system also includes a gaming cashier station (GCS) 16 for the purchase and redemption of players credit from smart card 12.

The GCS 16 includes a first interface 18 for transmitting the data in memory 14 to the GCS and writing to the memory 14 from a first data input means, in the form of keypad 20, to update the data in accordance with credit, cash or gaming token transactions.

The GCS may be incorporated into a traditional casino cashier's cage as indicated at 16, or optionally may be a stand-alone self-service terminal similar to a bank ATM as indicated by GCS 22.

The gaming system further includes a gaming table station (GTS) 24 where a players credits are redeemed from the memory 14 of smart card 12 for subsequent gambling. The GTS 24 includes a second interface 26 adapted to transmit the data 14 to the GTS and write to memory means 14 from a second data input means, in the form of keypad 28, to update the data in accordance with credit or gaming token transactions.

Only one GTS is indicated in Figure 1 for clarity purposes. However, it will be understood that a casino would generally include a number of such GTS's.

The gaming system may also include a central database 30 to which all the GTS's and GCS's are connected.

An auditing system 32 may also be connected to common database 30.

GTS 24 may also include a printer 34 for producing hard copy receipts of the transactions at the table and display means 36 having screens 38 and 40 for viewing by both the players at player positions 41 and the dealer or croupier and providing a visual indication of all transactions.

If so desired, this display means can be linked to the existing video security monitoring system present in most casinos.

To use the cashless gaming system 10 shown in Figure 1 a player first obtains a portable data carrier 12, having memory 14. The data carrier is issued by the casino for use only at its premises. The casino can issue the player with the portable data carrier 12 in a number of ways. It can be delivered to the player before arriving at the casino or issued at the casino from the traditional cashier's cage 16 or on the casino floor from a self-serve data carrier dispenser 22. Once the portable data carrier 12 is issued to the player the casino can optionally allow it be retained by the player for use any time in the future or to be returned after the gaming session is complete.

After obtaining a portable data carrier 12, the player that the memory 14 of ensures that the portable data carrier is loaded with a sufficient monetary value of "credits" for the planned gaming session. If the portable data carrier memory 14 already contains sufficient credits the player proceeds directly to the gaming area. If the player needs to add credit to the portable data carrier 12, they do so by exchanging monetary consideration for credits either at GCS 16 or 22.

Once a player has sufficient credit on the portable data carrier 12 to gamble they are free to take the portable data carrier 12 to any of the GTS's 24 equipped to handle such portable data carriers 12. Upon selecting a table at which the player wishes to gamble, the player then hands the portable data carrier 12 to the table dealer or croupier and indicates the monetary value the player wishes to redeem from the memory 14 and exchange for gaming tokens.

The croupier or dealer takes the portable data carrier from the player and places it into the read/write interface 26 of the GTS. By inputting the transaction details via keypad 28 the gaming table station will read the amount of credits in the card memory and then update the memory 14 in accordance with the transaction. The croupier or dealer then returns the portable data carrier 12 to the player along with gaming tokens to the value of the credits deducted.

The dealer or croupier can optionally provide the player with a hard copy receipt of the transaction from printer 34. From this point onwards, the player can gamble at the chosen table in a traditional manner using the purchased gaming tokens.

At the end of a player's gambling session a casino using the cashless gaming system cashes out the player by one of two equally secure methods. If the casino uses the traditional cash-out procedure then the player exchanges the gaming tokens at the cashier's cage 16. If the casino implements the second variation to cash-out, the player is allowed to cash-out at the GTS 24 itself.

In the casino implements traditional cash-out procedures, the player takes the gaming tokens back to the cashier and exchanges tokens for money. Also, the player gives the cashier the portable data carrier 12 who inserts it into the gaming cashier station interface 18. The interface 18 automatically records the current time against the player's identification number contained on the portable data carrier 12. The cashier then determines the money owed to the player by counting up the value of the returned gaming tokens plus the monetary value of the credit indicated by memory 14 of portable data carrier 12. The money owed the player is then returned as cash or alternatively memory 14 is updated accordingly to indicate the extra credit.

If the player is a regular at the casino, the permanently allocated portable data carrier 12 is returned to the player whether or not it has any credits remaining. If the player is only a temporary visitor and has completed the planned visit at the casino, the cashier then ensures that both the gaming tokens and portable data carrier are cashed-out and retains the portable data carrier 12 for reissue.

In an alternative method of cashing out, the casino allows the player to cash-out the gaming tokens at the table itself. Implementing the cash-out procedure at the table provides the player with a more convenient way of cashing out and also provides the casino with a very accurate method of determining the player's betting pattern at particular gaming tables as well as providing an accurate determination of a particular gaming table's hold percentage.

To cash-out, the player returns the gaming tokens and the portable data carrier to the croupier or dealer. The dealer or croupier then inserts the portable data carrier 12 into the interface 26 of the GTS station which then automatically stores the current time against the player's identification number stored on the portable data carrier 12. The croupier or dealer then calculates the monetary value of the gaming tokens returned and using the interface 26 and keypad 28 updates memory 14 accordingly.

The casino may implement additional security when cashing out the gaming tokens at the gaming table station such as cash-out verification by a second casino employee such as the pit boss.

The dealer or croupier then returns the portable data carrier to the player and optionally provides the player with a hard copy receipt of the transaction98 At this point, the player is free to use the portable data carrier at any other gaming table.

At the end of the current gaming session, the player either retains the portable data carrier for use in the casino on another gaming session or takes the portable data carrier to the cashier's cage for cash reimbursement of the table credits.

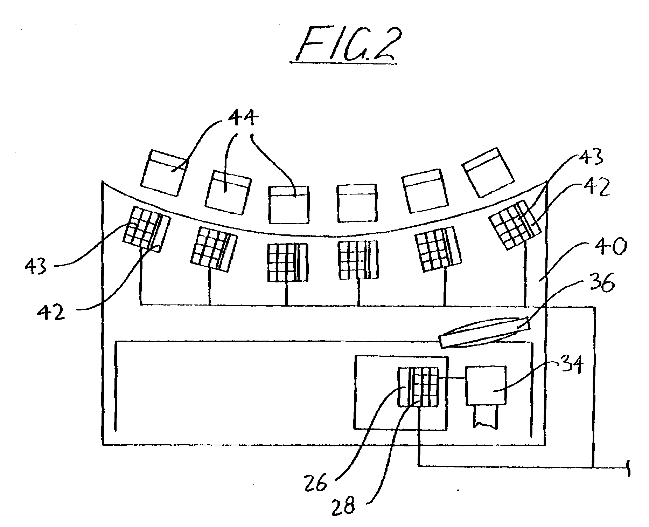

Turning now to Figure 2, there is shown an embodiment of the invention adapted to allow a casino to use non value gaming chips.

In this embodiment, the GTS 40 includes a number of interfaces 42 including keypads 43. Each interface 42 is respectfully associated with each player position 44 at the GTS. All of the player interfaces 42 are linked to the dealer or croupier interface 26.

To use non-value gaming chips a player with a portable data carrier 12 chooses one of the player positions 44 and inserts the data carrier into the interface associated with their player position. Each of the player positions contain a number of gaming chips which are used only to visually indicate the type, combination and value of the bet they wish to wager. In this way, the player uses the valueless chips to indicate a wager in the normal manner.

The dealer is then provided with a traditional and easy to interpret indication of the wagers the player wishes to make by looking at the table.

After interpreting the wager value and type the dealer enters the wager details into his keypad and they are displayed to the player. The player then either acknowledges the dealers understanding is correct, query the dealer or request a new wager.

It is important to note that at this point the gaming chips merely indicate an intention on the players part to place a certain value and type of bet.

When the player has acknowledged that the wager displayed by the dealer is correct the dealer, via interface 26, removes the total value of the bet in the form of gaming credits from the memory 14 of each players portable data carrier. These gaming credits are held in escrow by the dealers interface pending the game outcome.

The game is then played in the traditional fashion.

If the players looses, the dealer, via interface 26, transfers the players gaming credits from the escrow holding account to the dealers casino account. The gaming chips on the table are then cleared.

Alternatively, if the player wins, the dealer calculates the player win indicated by the gaming chips on the table and then updates the memory of the players portable data carrier by returning the original bet from the escow account and the additional credit provided by the player win. The gaming chips on the table are then cleared.

In all forms of the invention, it is envisaged that the component parts such as the dealer and or player interfaces will be produced in module form. This will allow the casino operator to quickly change out a faulty part with minimum interruption to the casino operation.

Also, each of the croupier or dealer interfaces may be equipped with additional security precautions such as the improvso that an authorised operators card be inserted into them for activation to ensure no unauthorised use occurs.

The gaming system according to the invention provides many advantages over existing traditional gaming methods.

Firstly, the gaming system eliminates for the need for cash to be transported with in the casino and as such reduces the security problems inherit with this transportation. Furthermore, the gaming system reduces the need for cash to be used at individual gaming tables once again increasing the security of both the player and dealer cash and also reduces the need for monitoring dealer integrity.

Also, the gaming system provides the casino with extra information about both its players and its gaming tables. The auditing field also monitors the croupier integrity in updating the memory of the portable data carriers.

In the non value chip embodiment of the invention, the system reduces the need for casinos to be concerned with counterfeit chips being used in the casino. The additional advantages flowing on from this is that the higher chip costs associated in producing high security chips that reduce counterfeiting are avoided. This is because the gaming chips have no monetary value themselves and then, by default, there is nothing to be gained by counterfeiting such chips.

Another advantage of the gaming system according to the invention resides in the fact that implementation of the system into an existing casino does not appreciably alter the existing procedures all ready familiar to both players and dealers.

Although the invention has been described with reference to specific examples, it will be appreciated by those skilled in the art that the invention may be embodied in many other forms.

## Claims

1. A casino gaming system including:
a portable data carrier having memory means with contents storing data indicative of a player's credits;
a gaming cashier station for the purchase and redemption of said player's credits from said data carrier, said gaming cashier station including a first interface adapted to transmit said contents to said gaming cashier station and write to said memory means from a first data input means to up-date said contents in accordance with credit, cash, or gaming token transactions;
a gaming table station where said player's credits are redeemed from said data carrier for subsequent gambling, said gaming table station including a second interface adapted to transmit said contents to said gaming table station and write to said memory means from a second data input means to up-date said contents in accordance with credit or gaming token transactions.

2. A gaming system as claimed in claim 1 wherein the portable data carrier contains player information.

3. A gaming system as claimed in claim 2 wherein said player information includes one or more of the following: player/data carrier identification number; bonus points accumulated; player rating based on play frequency and size of bets; or favourite drink.

4. A gaming system as claimed in claims 1 to 3 wherein the portable data carrier is configured to indicate a preferred amount of credit redemption.

5. A gaming system as claimed in claim 4 wherein the preferred amount of credit redemption is visually indicated by a colour or other external visual feature of the portable data carrier.

6. A gaming system as claimed in any one of the preceding claims wherein the gaming system includes more than one gaming table station and a local area network is used to connect all gaming table stations to a common data base.

7. A gaming system as claimed in claim 6 wherein the gaming system includes more than one gaming cashier station and all the gaming table and cashier stations are connected to the data base.

8. A gaming system as claimed in claim 6 or 7 including an audit collection system including a portable audit collection device.

9. A gaming system as claimed in claim 8 including an audit collection network.

10. A gaming system as claimed in claim 8 or 9 wherein the audit collection system is connected to the data base.

11. A gaming system as claimed in claim 8 or 9 wherein the portable data collection device is adapted to be connected to each individual gaming table station for up-loading audit data stored in each table gaming station.

12. A gaming system as claimed in any one of the preceding claims wherein the portable data carrier is a solid state memory device capable of reading, writing and storing encrypted data.

13. A gaming system as claimed in any one of the preceding claims wherein the portable data carrier includes hardware logic to prevent unauthorised access and/or tampering of the stored data.

14. A gaming system as claimed in any one of the preceding claims wherein the portable data carrier physically resembles a standard credit card.

15. A gaming system as claimed in any one of the preceding claims wherein the gaming cashier station can display information to both the cashier and the player, produce hard copy receipts of the transaction and store, retrieve and process audit data with respect to all transactions.

16. A gaming system as claimed in claim 15 wherein the transactions are carried out on the portable data carrier by the gaming cashier station operator.

17. A gaming system as claimed in any one of the preceding claims wherein the gaming table station includes a display to ensure all transactions are visible to the player, the dealer or croupier as well as a video security monitoring system.

18. A gaming system as claimed in any one of the preceding claims wherein each of the gaming table stations includes a printer to provide a hard copy receipt of all portable data carrier transactions.

19. A gaming system as claimed in any one of the preceding claims wherein the gaming table station is adapted to store and retrieve audit data with respect to all transactions carried out on the portable data carrier.

20. A gaming system as claimed in any one of the preceding claims wherein the gaming system is adapted to allow a casino to use non-value gaming chips.

21. A gaming system as claimed in claim 20 wherein the gaming table stations each include an interface respectively associated with each player at the table.

22. A gaming system as claimed in claim 21 wherein the player interfaces are each connected to the dealer interface and are adapted to allow portable data carrier memory updating to occur directly in accordance with gaming transactions.
